# EUROPEAN PATENT SPECIFICATION

(11) **EP 4 563 641 B1**
(45) Date of publication and mention of the grant of the patent: **14.01.2026**
(21) Application number: 24215607.3
(22) Date of filing: 26.11.2024
(51) Int. Cl.: C08L 23/12

(54) **POLYPROPYLENE RESIN COMPOSITION WITH EXCELLENT LOW-TEMPERATURE IMPACT RESISTANCE AND LOW VOLATILE ORGANIC COMPOUNDS AND ARTICLE MOLDED THEREFROM**
POLYPROPYLENHARZZUSAMMENSETZUNG MIT HERVORRAGENDER TIEFTEMPERATURSCHLAGZÄHIGKEIT UND FLÜCHTIGEN ORGANISCHEN VERBINDUNGEN SOWIE DARAUS GEFORMTER ARTIKEL
COMPOSITION DE RÉSINE DE POLYPROPYLÈNE PRÉSENTANT UNE EXCELLENTE RÉSISTANCE AUX CHOCS À BASSE TEMPÉRATURE ET COMPOSÉS ORGANIQUES FAIBLEMENT VOLATILS ET ARTICLE MOULÉ À PARTIR DE CELLE-CI

(30) Priority: 30.11.2023 KR 20230170408
(43) Date of publication of application: 04.06.2025
(73) Proprietor: Hanwha TotalEnergies Petrochemical Co., Ltd., Seosan-si, Chungcheongnam-do 31900 (KR)
(72) Inventor: KIM, SungHyun, 31900 Chungcheongnam-do (KR); JUNG, Hyeyoung, 31900 Chungcheongnam-do (KR); LEE, Eunwoong, 31900 Chungcheongnam-do (KR)
(74) Representative: HGF

(56) References cited:
- EP-B1- 2 530 117
- US-A1- 2014 213 719
- US-B2- 10 450 451
- US-B2- 11 434 355

## Description

### Technical Field

The present invention relates to a polypropylene resin composition with excellent impact resistance and a low level of volatile organic compounds discharged and to an article molded therefrom. Specifically, the present invention relates to a polypropylene resin composition that comprises a propylene-ethylene block copolymer resin as a main component and has excellent impact resistance at low temperatures and room temperature and a low level of volatile organic compounds discharged and to a molded article prepared therefrom.

### Background Art of the Invention

A polypropylene resin, which is one of the general-purpose resins, is not only inexpensive but also excellent in mechanical properties, moldability, and chemical resistance. Thus, it is widely used as a material for automobile interior and exterior parts, electronic and household appliance parts, construction and industrial supplies, films, pipes, power cables, and the like.

A propylene-ethylene block copolymer, which is a type of polypropylene, is a polymer in which a propylene-ethylene rubber copolymer is dispersed in a propylene homopolymer. It is a resin that reinforces the impact resistance of a propylene homopolymer.

In particular, when the content of a propylene-ethylene rubber copolymer in a propylene-ethylene block copolymer is 25% by weight or more, it is known to have very good impact resistance such that the Izod impact strength is 50 kgf·cm/cm or more when measured at 23°C, and an Izod specimen is not completely fractured even after the impact test. Such a high-impact resistant polypropylene resin produced in a reactor is called a reactor-made-thermoplastic olefin (R-TPO). While R-TPO has excellent impact resistance at room temperature (23°C), it has low impact resistance at low temperatures (e.g., 0°C); thus, there is a limit to its application that requires high impact resistance at low temperatures.

Polypropylene resins, which have excellent impact resistance, are difficult to have a high melt index; thus, a peroxide is usually added to polypropylene resins to increase the final melt index. However, the residual peroxide has a strong odor and discharges a large amount of volatile organic compounds, making it unsuitable for use as automobile parts or food containers. Accordingly, there is a need to develop a polypropylene resin composition that has excellent impact resistance and high melt index characteristics and discharges a low amount of volatile organic compounds.

### Prior Art Documents

### Patent Documents

Patent Document 1: Korean Laid-open Patent Publication No. 10-2007-0098279

### Disclosure of the Invention

### Technical Problem to Solve

An object of the present invention is to provide a polypropylene resin composition that has excellent impact resistance at low temperatures and room temperature and a low level of volatile organic compounds discharged.

Another object of the present invention is to provide an article molded from the polypropylene resin composition that has excellent impact resistance at low temperatures and room temperature and a low level of volatile organic compounds discharged.

### Solution to the Problem

According to an embodiment of the present invention for accomplishing the above object, there is provided a polypropylene resin composition that comprises, based on the total weight of components (A) and (B), (A) 85 to 97% by weight of a propylene-ethylene block copolymer obtained by the polymerization of a propylene homopolymer as a matrix with a propylene-ethylene rubber copolymer in stages in reactors; and (B) 3 to 15% by weight of a polyethylene, wherein, when the propylene-ethylene block copolymer (A) is extracted with a xylene solvent at room temperature, the content of the propylene-ethylene rubber copolymer measured as the amount of a solvent extract (or xylene soluble) is 25 to 40% by weight, the content of ethylene in the xylene soluble is 35 to 45% by weight, the content of ethylene in the propylene-ethylene block copolymer (A) is 9 to 20% by weight, and the ratio (MFR_{T}/MFR_{M}) of the melt index (MFR_{T}) of the polypropylene resin composition to the melt index (MFR_{M}) of the propylene homopolymer matrix of the propylene-ethylene block copolymer (A) satisfies 0.3 or less when measured at 230°C under a load of 2.16 kg.

In a specific embodiment of the present invention, the propylene-ethylene block copolymer (A) may have a melt index of 30 to 50 g/10 minutes when measured at 230°C under a load of 2.16 kg.

In a specific embodiment of the present invention, the polyethylene (B) may comprise a low-density polyethylene (LDPE), a linear low-density polyethylene (LLDPE), or a high-density polyethylene (HDPE).

In a preferred embodiment of the present invention, the polyethylene (B) may comprise a high-density polyethylene.

In a specific embodiment of the present invention, the polypropylene resin composition may further comprise at least one additive selected from the group consisting of an antioxidant, a neutralizer, a slip agent, an anti-blocking agent, a reinforcing agent, a filler, a weathering stabilizer, an antistatic agent, a lubricant, a nucleating agent, a flame retardant, a pigment, and a dye.

In a specific embodiment of the present invention, the polypropylene resin composition may further comprise at least one antioxidant selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite in an amount of 0.05 to 0.3 part by weight relative to 100 parts by weight of the composition.

In a specific embodiment of the present invention, the polypropylene resin composition may further comprise at least one neutralizer selected from the group consisting of hydrotalcite and calcium stearate in an amount of 0.05 to 0.3 part by weight relative to 100 parts by weight of the composition.

In a specific embodiment of the present invention, the polypropylene resin composition may have a melt index of 30 to 50 g/10 minutes when measured at 230°C under a load of 2.16 kg.

In a specific embodiment of the present invention, when the polypropylene resin composition is analyzed by differential scanning calorimetry, it may have a temperature of the first peak in the range of 125 to 130°C that appears during the second elevation of temperature.

In a specific embodiment of the present invention, the amount of total volatile organic compounds discharged from the polypropylene resin composition may be 400 ppm or less.

According to another embodiment of the present invention, there is provided a polypropylene resin article molded from the polypropylene resin composition.

In a specific embodiment of the present invention, the polypropylene resin article may be prepared by injection-molding the polypropylene resin composition.

In a specific embodiment of the present invention, the polypropylene resin article may have an Izod impact strength of 50 kgf·cm/cm or more when measured at 23°C and an Izod impact strength of 50 kgf·cm/cm or more when measured at 0°C.

The polypropylene resin article according to an embodiment of the present invention may be an automobile interior or exterior part, a toy for children, or a food storage container.

### Effects of the Invention

Since a polypropylene resin article prepared from the polypropylene resin composition according to an embodiment of the present invention has excellent low-temperature impact resistance and a low level of volatile organic compounds discharged, it can be advantageously used as an automobile interior or exterior part, a toy for children, or a food storage container.

### Brief Description of the Drawings

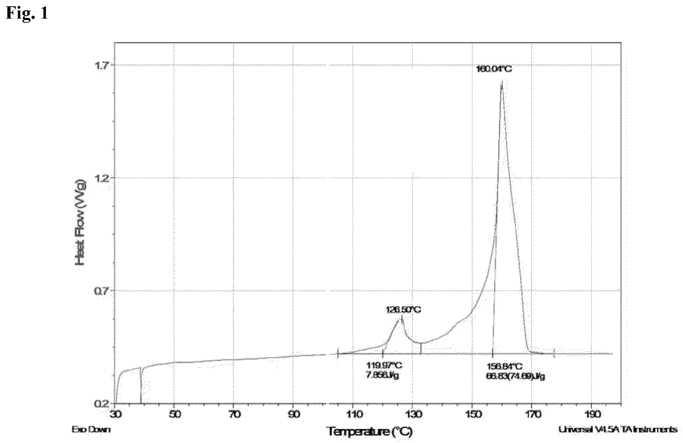

Fig. 1 is a temperature elevation graph of the resin composition of Example 1 by differential scanning calorimetry.

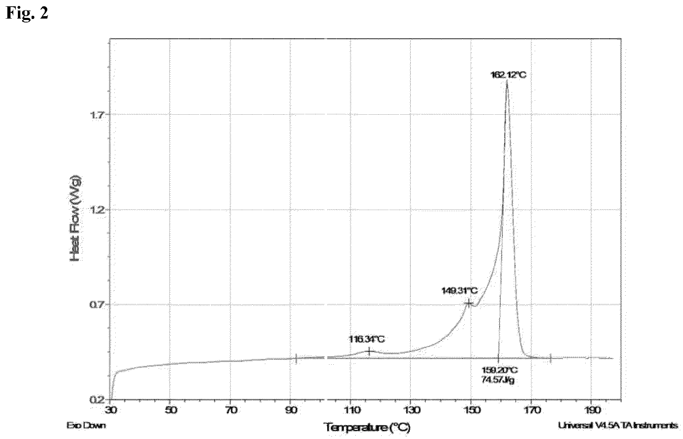

Fig. 2 is a temperature elevation graph of the resin composition of Comparative Example 1 by differential scanning calorimetry.

### Detailed Description for Carrying out the Invention

Hereinafter, the present invention will be described in more detail.

According to an embodiment of the present invention, there is provided a polypropylene resin composition, which comprises, based on the total weight of components (A) and (B), (A) 85 to 97% by weight of a propylene-ethylene block copolymer obtained by the polymerization of a propylene homopolymer as a matrix with a propylene-ethylene rubber copolymer in stages in reactors; and (B) 3 to 15% by weight of a polyethylene, wherein, when the propylene-ethylene block copolymer (A) is extracted with a xylene solvent at room temperature, the content of the propylene-ethylene rubber copolymer measured as the amount of a solvent extract (or xylene soluble) is 25 to 40% by weight, the content of ethylene in the xylene soluble is 35 to 45% by weight, the content of ethylene in the propylene-ethylene block copolymer (A) is 9 to 20% by weight, and the ratio (MFR_{T}/MFR_{M}) of the melt index (MFR_{T}) of the polypropylene resin composition to the melt index (MFR_{M}) of the propylene homopolymer matrix of the propylene-ethylene block copolymer (A) satisfies 0.3 or less when measured at 230°C under a load of 2.16 kg.

### (A) Propylene-ethylene block copolymer

The polypropylene resin composition according to an embodiment of the present invention comprises a propylene-ethylene block copolymer (A). Here, the propylene-ethylene block copolymer (A) may be a polymer obtained by the polymerization of a propylene homopolymer with a propylene-ethylene rubber copolymer in stages in reactors.

Specifically, when the propylene-ethylene block copolymer (A) is extracted with a xylene solvent at room temperature, the content of the propylene-ethylene rubber copolymer measured as the amount of a solvent extract (or xylene soluble) is 25 to 40% by weight. Preferably, when the propylene-ethylene block copolymer (A) is extracted with a xylene solvent at room temperature, the content of the propylene-ethylene rubber copolymer measured as the amount of a solvent extract (or xylene soluble) may be 26 to 38% by weight, more preferably, 30 to 35% by weight. If the content of the propylene-ethylene rubber copolymer is less than 25% by weight, the Izod impact strength of a resin article molded from the composition when measured at 23°C may be deteriorated. If the content of the propylene-ethylene rubber copolymer exceeds 40% by weight, there is a possibility that the Izod impact strength of a resin article molded from the composition may not be further improved while the flexural modulus thereof is deteriorated.

In addition, the content of ethylene in the xylene soluble of the propylene-ethylene block copolymer (A) is 35 to 45% by weight. Preferably, the content of ethylene in the xylene soluble of the propylene-ethylene block copolymer (A) may be 36 to 44% by weight, more preferably, 37 to 44% by weight. If the content of ethylene in the xylene soluble is less than 35% by weight or greater than 45% by weight, the Izod impact strength of a resin article molded from the composition when measured at 23°C may be deteriorated.

In addition, the content of ethylene in the propylene-ethylene block copolymer (A) is 9 to 20% by weight. Preferably, the content of ethylene in the propylene-ethylene block copolymer (A) may be 10 to 18% by weight, more preferably, 12 to 16% by weight. If the content of ethylene in the propylene-ethylene block copolymer (A) is less than 9% by weight, the Izod impact strength at 23°C of a resin article molded therefrom may be deteriorated. If the content of ethylene in the propylene-ethylene block copolymer (A) exceeds 20% by weight, the compatibility between the propylene homopolymer and the propylene-ethylene rubber copolymer is low, which makes difficult the dispersion of the propylene-ethylene rubber copolymer in the propylene homopolymer matrix. As a result, there is a concern that the balance of rigidity and impact resistance of a resin article molded from the composition may be reduced.

In a specific embodiment of the present invention, the propylene-ethylene block copolymer (A) may have a melt index of 30 to 50 g/10 minutes when measured at 230°C under a load of 2.16 kg. Preferably, the melt index of the propylene-ethylene block copolymer (A) measured at 230°C under a load of 2.16 kg may be 35 to 45 g/10 minutes.

If the melt index is less than 30 g/10 minutes, the flowability of the resin composition during injection may be decreased, thereby deteriorating processability. If the melt index exceeds 50 g/10 minute, there is a concern that the impact resistance of a resin article molded from the composition may not be sufficiently improved.

The polypropylene resin composition according to an embodiment of the present invention comprises 85 to 97% by weight of the propylene-ethylene block copolymer (A) based on the total weight of components (A) and (B). Preferably, the polypropylene resin composition may comprise 90 to 97% by weight of the propylene-ethylene block copolymer (A) based on the total weight of components (A) and (B). If the content of the propylene-ethylene block copolymer (A) is less than 85% by weight, the flexural modulus of a resin article molded from the composition may be deteriorated. On the other hand, if the content of the propylene-ethylene block copolymer (A) exceeds 97% by weight, the Izod impact strength of a resin article molded from the composition when measured at 0°C may be deteriorated.

There is no particular limitation to the method of preparing the propylene-ethylene block copolymer (A). Any method of preparing a propylene-ethylene block copolymer known in the art to which the present invention pertains may be used as it is or appropriately modified. For example, a bulk polymerization method, a solution polymerization method, a slurry polymerization method, a gas phase polymerization method, or the like may be used. Further, either a batch type or a continuous type is possible.

In addition, in order to increase the molecular weight distribution of the propylene-ethylene block copolymer (A), if necessary, several polymerization reactors for the polymerization of propylene-based polymers are arranged in series, and the polymerization may be carried out sequentially with the degree of polymerization in each polymerization reactor adjusted to be different.

Specifically, the propylene-ethylene block copolymer (A) may be prepared by a polymerization method known to those skilled in the art using a commercialized process such as LyondellBasell's Spherizone process, Mitsui's Hypol process, or Grace's Unipol process.

The Spherizone process may be a process in which one loop-type reactor called a multizone circulating reactor (MZCR) and one gas-phase reactor are connected in series to enable continuous polymerization. Specifically, propylene alone may be fed to the MZCR reactor to produce a propylene homopolymer. In the ensuing gas-phase reactor, propylene and ethylene may be fed to carry out the block-polymerization of a propylene-ethylene rubber component, thereby obtaining the propylene-ethylene block copolymer. The melt index of the resulting copolymer can be controlled by injecting hydrogen into each reactor.

The Hypol process may be a process in which two bulk or slurry reactors and two gas-phase reactors are connected in series to enable continuous polymerization. Specifically, propylene alone may be fed to the first- to third-stage reactors to produce a propylene homopolymer. In the ensuing fourth-stage reactor, propylene and ethylene may be fed to carry out the block-polymerization of a propylene-ethylene rubber component, thereby obtaining the propylene-ethylene block copolymer. The melt index of the resulting copolymer can be controlled by injecting hydrogen into each reactor.

In the Unipol process, two or more gas-phase reactors are connected in series, and polymerization can be continuously carried out. Specifically, in a process in which two gas-phase reactors are connected in series, propylene alone may be fed to the first-stage reactor to produce a propylene homopolymer. In the ensuing second-stage reactor, propylene and ethylene may be fed to carry out the block-polymerization of a propylene-ethylene rubber component, thereby obtaining the propylene-ethylene block copolymer. The melt index of the resulting copolymer can be controlled by injecting hydrogen into each reactor.

The propylene-ethylene block copolymer (A) may be polymerized in the presence of a Ziegler-Natta catalyst or a metallocene catalyst.

Specifically, a Ziegler-Natta catalyst may be prepared using a phthalate-based, succinate-based, or diether-based internal electron donor, two or more of which may be used in combination.

More specifically, dialkoxymagnesium may be reacted with a titanium compound and a phthalate-based, succinate-based, or diether-based internal electron donor in the presence of an organic solvent to prepare a catalyst for the polymerization of propylene. A propylene monomer may then be polymerized in the presence of this catalyst, along with a co-catalyst and an external electron donor, to produce a propylene-ethylene block copolymer (A).

For example, a catalyst system formed by selecting and combining the catalysts, alkylaluminum, and an appropriate external electron donor disclosed in Korean Laid-open Patent Publication Nos. 2006-0038101, 2006-0038102, and 2006-0038103 may be used. In particular, in order to maximize the balance between rigidity and impact resistance of the resin article of the present invention, it is preferable to use a catalyst capable of increasing the tacticity.

### (B) Polyethylene

The polypropylene resin composition according to an embodiment of the present invention comprises a polyethylene (B). Here, the polyethylene (B) may be a polymer obtained by the polymerization of an ethylene monomer substantially alone or by the copolymerization of a small amount of C₄₋₈ alpha-olefin with ethylene.

The type of the polyethylene (B) is not particularly limited. The polyethylene may comprise a low-density polyethylene (LDPE), a linear low-density polyethylene (LLDPE), or a high-density polyethylene (HDPE). Preferably, the polyethylene (B) may comprise a high-density polyethylene.

The polypropylene resin composition according to an embodiment of the present invention comprises 3 to 15% by weight of the polyethylene (B) based on the total weight of components (A) and (B). Preferably, the polypropylene resin composition may comprise 3 to 10% by weight of the polyethylene (B) based on the total weight of components (A) and (B). If the content of the polyethylene (B) is less than 3% by weight, the Izod impact strength of a resin article molded from the composition when measured at 0°C may be deteriorated. On the other hand, if the content of the polyethylene (B) exceeds 15% by weight, the flexural modulus of a resin article molded from the composition may be deteriorated.

The polypropylene resin composition according to an embodiment of the present invention may further comprise conventional additives within a range that does not depart from the scope of the present invention. For example, the polypropylene resin composition may further comprise at least one additive selected from an antioxidant, a neutralizer, a slip agent, an anti-blocking agent, a reinforcing agent, a filler, a weathering stabilizer, an antistatic agent, a lubricant, a nucleating agent, a flame retardant, a pigment, and a dye, but it is not particularly limited thereto.

In a specific embodiment of the present invention, the polypropylene resin composition may further comprise an antioxidant to increase the thermal stability thereof. In such an event, the content of the antioxidant may be 0.05 to 0.3 part by weight, preferably 0.05 to 0.2 part by weight, relative to 100 parts by weight of components (A) and (B). If the content of the antioxidant is less than 0.05 part by weight, it is difficult to secure long-term thermal stability. On the other hand, if the content of the antioxidant exceeds 0.3 part by weight, the thermal stability would not be further improved, while the economic efficiency of the product may be reduced, which is not preferable.

The antioxidant may be a phenolic antioxidant, a phosphite antioxidant, or the like. Specifically, it may comprise at least one antioxidant selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite, but it is not particularly limited thereto.

In a specific embodiment of the present invention, the polypropylene resin composition may further comprise a neutralizer to remove the catalyst components remaining in the polypropylene resin composition. In such an event, the content of the neutralizer may be 0.05 to 0.3 part by weight, preferably 0.05 to 0.2 part by weight, relative to 100 parts by weight of components (A) and (B). If the content of the neutralizer is less than 0.05 part by weight, it is difficult to sufficiently remove the residual catalyst components. On the other hand, if the content of the neutralizer exceeds 0.3 part by weight, the effect of removing the residual catalyst components would not be further improved, while the economic efficiency of the product may be reduced, which is not preferable.

The neutralizer may comprise at least one selected from the group consisting of hydrotalcite and calcium stearate, but it is not particularly limited thereto.

Meanwhile, there is no particular limitation to the method of preparing the polypropylene resin composition according to an embodiment of the present invention. Any blending method known in the technical field of the present invention may be used as it is or appropriately modified.

As a specific example, the propylene-ethylene block copolymer resin, polyethylene resin, and additives described above are supplied to a mixer such as a kneader, a roll, and a Banbury mixer, or a single- or twin-screw extruder in predetermined amounts, and they are then blended with this apparatus, thereby preparing the polypropylene resin composition of the present invention.

The polypropylene resin composition according to an embodiment of the present invention may have a melt index of 30 to 50 g/10 min when measured at 230°C under a load of 2.16 kg. Preferably, the melt index of the polypropylene resin composition measured at 230°C under a load of 2.16 kg may be 35 to 45 g/10 minutes. If the melt index of the polypropylene resin composition is less than 30 g/10 minutes, there is a concern that the melt flowability of the resin composition is low, resulting in molding defects during injection molding. If the melt index exceeds 50 g/10 minute, there is a concern that the impact resistance of a resin article molded from the composition may be low.

In addition, the ratio (MFR_{T}/MFR_{M}) of the melt index (MFR_{T}) of the polypropylene resin composition to the melt index (MFR_{M}) of the propylene homopolymer matrix of the propylene-ethylene block copolymer (A) satisfies 0.3 or less (MFR_{T}/MFR_{M} ≤ 0.3). Here, the respective melt indices are measured at 230°C under a load of 2.16 kg. When the above condition is satisfied, the amount of volatile organic compounds discharged from the polypropylene resin composition can be maintained to be low.

Here, the melt index of the propylene homopolymer matrix of the propylene-ethylene block copolymer (A) may be measured by sampling the propylene homopolymer before the propylene-ethylene rubber component is block-copolymerized in the above-mentioned preparation process.

In a specific embodiment of the present invention, when the polypropylene resin composition is analyzed by differential scanning calorimetry, it may have a temperature of the first peak in the range of 125 to 130°C that appears during the second elevation of temperature.

In a specific embodiment of the present invention, the amount of total volatile organic compounds discharged from the polypropylene resin composition may be 400 ppm or less. In the present invention, the melt index of the final resin composition can be increased without adding a peroxide, resulting in a low level of volatile organic compounds discharged.

According to another embodiment of the present invention, there is provided a polypropylene resin article molded from the polypropylene resin composition.

There is no particular limitation to the method of preparing a molded article from the polypropylene resin composition according to an embodiment of the present invention. Any method known in the technical field to which the present invention pertains may be used. For example, the polypropylene resin composition according to an embodiment of the present invention may be molded by a conventional method such as injection molding, extrusion molding, casting molding, or the like to prepare a polypropylene resin article. Preferably, the polypropylene resin composition may be injection molded to prepare a polypropylene resin article.

In a specific embodiment of the present invention, the polypropylene resin article may have an Izod impact strength of 50 kgf·cm/cm or more when measured at 23°C and an Izod impact strength of 50 kgf·cm/cm or more when measured at 0°C.

Since the polypropylene resin article according to an embodiment of the present invention has excellent low-temperature impact resistance and a low level of volatile organic compounds discharged, it can be advantageously used as an automobile interior or exterior part, a toy for children, or a food storage container.

In particular, since the polypropylene resin article according to an embodiment of the present invention has excellent impact resistance even at low temperatures, it is suitable for use as an automobile bumper. It may substitute a polyolefin-based thermoplastic elastomer in a polypropylene composite resin composition, thereby producing a costreduction effect.

### Example

Hereinafter, the present invention is explained in detail by the following examples. However, the following examples are intended to further illustrate the present invention. The scope of the present invention is not limited thereto only.

### Example 1 and Comparative Examples 1 and 2

A propylene-ethylene block copolymer (A) was prepared using Grace's Consista C601 catalyst in Grace's Unipol process. Specifically, propylene was fed to the first-stage gas-phase reactor to prepare a propylene homopolymer matrix. Propylene and ethylene were copolymerized in the presence of the propylene homopolymer matrix in the subsequent second-stage gas-phase reactor to prepare a propylene-ethylene block copolymer (A). The composition of the propylene-ethylene block copolymer thus obtained is shown in Table 1.

The propylene-ethylene block copolymer resin of Table 1 was mixed with a polyethylene resin (B) (Hanwha TotalEnergies, HDPE C430A; MFR (at 190°C and 2.16 kg) 1.7 g/10 minutes) in the composition shown in Table 2 below, followed by mixing and kneading with 500/500 ppm of antioxidants (Irganox 1010/Irgafos 168) and 400 ppm of a neutralizer (calcium stearate). Pellets of the polypropylene resin composition were prepared using a twin-screw kneading extruder (SM Platek, TEK-30, L/D 36, 30-mm twin-screw extruder). Then, ASTM No. 4 injection specimens were prepared using a Woojin injection machine (SELEX-TE 150, 150 tons, screw diameter 36 mm). The physical properties were measured in the following manner and summarized in Table 3 below.

### (1) Melt index (melt flow rate (MFR); g/10 minutes)

The melt index of the polypropylene resin composition, the polypropylene homopolymer matrix and the propylene-ethylene block copolymer was measured at 230°C under a load of 2.16 kg according to ASTM D 1238.

### (2) Content (% by weight) of xylene solvent extract (xylene soluble)

It was measured in accordance with the ASTM D5492. Specifically, a polypropylene-based resin was dissolved in xylene at a concentration of 1% by weight at 140°C for 1 hour and left at room temperature (23°C) for 2 hours. The weight of the extract was then measured. The weight thus measured was expressed in percent based on the total weight of the polypropylene-based resin.

### (3) Ethylene content (% by weight)

It was measured by FT-IR in accordance with ASTM D3900.

### (4) Flexural modulus

The flexural modulus was measured at 23°C in accordance with ASTM D770.

### (5) Izod impact strength

The Izod impact strength was measured with a notched specimen having a thickness of 3.2 mm at 0°C and 23°C according to ASTM D256.

### (6) Amount of total volatile organic compounds (VOC) discharged

A static head space sampler (Agilent's 7697A) was used. After resin pellets reached equilibrium at a certain temperature (180°C), the volatile organic components generated were analyzed using GC/FID (Agilent's 7890B) with n-hexane as a reference material.

### (7) Temperature of the first peak in second temperature elevation

Exothermic and endothermic curves were obtained by differential scanning calorimetry. Specifically, a sample was placed in an aluminum pan, the temperature was first raised to 200°C at 40°C/minute, the temperature was maintained at 200°C for 10 minutes, the temperature was lowered to 30°C at 10°C/minute, the temperature was maintained at 30°C for 10 minutes, and the temperature was raised again to 200°C at 10°C/minute. The temperature at which the first peak appeared in the endothermic curve during the second temperature elevation was obtained.

**[Table 1]**

| | A-1 | A-2 | A-3 |
|---|---|---|---|
| Melt index of the propylene homopolymer matrix (g/10 min.) | 170 | 100 | 95 |
| Melt index of the propylene-ethylene block copolymer (g/10 min.) | 42 | 43 | 42 |
| Xylene soluble content (% by weight) | 33.4 | 31.6 | 31.5 |
| Content of ethylene (% by weight) in the xylene soluble component | 39.0 | 47.5 | 37.8 |
| Content of ethylene (% by weight) in the propylene-ethylene block copolymer | 12.3 | 17.1 | 11.1 |

**[Table 2]**

| | Ex. 1 | C. Ex. 1 | C. Ex. 2 |
|---|---|---|---|
| A-1 | 97 | - | - |
| A-2 | - | 100 | - |
| A-3 | - | - | 97 |
| B | 3 | 0 | 3 |

**[Table 3]**

| | Ex. 1 | C. Ex. 1 | C. Ex. 2 |
|---|---|---|---|
| Melt index of the composition (g/10 min.) | 40 | 43 | 37 |
| MFR_{T}/MFR_{M} | 0.23 | 0.43 | 0.38 |
| Flexural modulus (kgf/cm2) | 7,200 | 7,400 | 7,550 |
| Izod impact strength (23°C, kgf·cm/cm) | 60 | 62 | 60 |
| Izod impact strength (0°C, kgf·cm/cm) | 57 | 19 | 60 |
| Total volatile organic compounds (ppm) | 370 | 530 | 490 |

As can be seen from Tables 1 to 3 above, in the polypropylene resin composition according to Example 1, falling within the scope of the present invention, the molded article prepared therefrom had excellent flexural modulus and Izod impact strength at 0°C and 23°C. In addition, the level of total volatile organic compounds discharged was low.

In contrast, in the resin composition of Comparative Example 1, which did not comprise a polyethylene resin, the Izod impact strength at 0°C was deteriorated. In Comparative Example 2, the Izod impact strength 0°C and 23°C was excellent, whereas the ratio MFR_{T}/MFR_{M} exceeded the range of the present invention, indicating that a large amount of total volatile organic compounds was discharged.

Since the polypropylene resin composition according to an embodiment of the present invention has excellent impact resistance and a low level of total volatile organic compounds discharged, an article molded therefrom can be advantageously used as an automobile interior or exterior part, a toy for children, or a food storage container.

## Claims

1. A polypropylene resin composition, which comprises, based on the total weight of components (A) and (B), (A) 85 to 97% by weight of a propylene-ethylene block copolymer obtained by the polymerization of a propylene homopolymer as a matrix with a propylene-ethylene rubber copolymer in stages in reactors; and (B) 3 to 15% by weight of a polyethylene, wherein, when the propylene-ethylene block copolymer (A) is extracted with a xylene solvent at room temperature in accordance with the ASTM D5492, the content of the propylene-ethylene rubber copolymer measured as the amount of a solvent extract (or xylene soluble) is 25 to 40% by weight, the content of ethylene in the xylene soluble when measured by FT-IR in accordance with ASTM D3900 is 35 to 45% by weight, the content of ethylene in the propylene-ethylene block copolymer (A) when measured by FT-IR in accordance with ASTM D3900 is 9 to 20% by weight, and the ratio (MFR_{T}/MFR_{M}) of the melt index (MFR_{T}) of the polypropylene resin composition to the melt index (MFR_{M}) of the propylene homopolymer matrix of the propylene-ethylene block copolymer (A) satisfies 0.3 or less when measured at 230°C under a load of 2.16 kg.

2. The polypropylene resin composition of claim **1,** wherein the propylene-ethylene block copolymer (A) has a melt index of 30 to 50 g/10 minutes when measured at 230°C under a load of 2.16 kg according to ASTM D1238.

3. The polypropylene resin composition of claim 1 or 2, wherein the polyethylene (B) comprises a low-density polyethylene (LDPE), a linear low-density polyethylene (LLDPE), or a high-density polyethylene (HDPE).

4. The polypropylene resin composition of claim 3, wherein the polyethylene (B) comprises a high-density polyethylene.

5. The polypropylene resin composition of any one of claims 1 to 4, which further comprises at least one additive selected from the group consisting of an antioxidant, a neutralizer, a slip agent, an anti-blocking agent, a reinforcing agent, a filler, a weathering stabilizer, an antistatic agent, a lubricant, a nucleating agent, a flame retardant, a pigment, and a dye.

6. The polypropylene resin composition of claim 5, wherein the antioxidant comprises at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, and tris(2,4-di-t-butylphenyl)phosphite in an amount of 0.05 to 0.3 part by weight relative to 100 parts by weight of components (A) and (B).

7. The polypropylene resin composition of claim 5, wherein the neutralizer comprises at least one selected from the group consisting of hydrotalcite and calcium stearate in an amount of 0.05 to 0.3 part by weight relative to 100 parts by weight of components (A) and (B).

8. The polypropylene resin composition of any one of claims 1 to 7, which has a melt index of 30 to 50 g/10 minutes when measured at 230°C under a load of 2.16 kg according to ASTM D1238.

9. The polypropylene resin composition of any one of claims 1 to 8, wherein when the polypropylene resin composition is analyzed by differential scanning calorimetry, it has a temperature of the first peak in the range of 125 to 130°C that appears during the second elevation of temperature.

10. The polypropylene resin composition of any one of claims 1 to 9, which has 400 ppm or less of an amount of total volatile organic compounds discharged.

11. A polypropylene resin article molded from the polypropylene resin composition according to any one of claims 1 to 10.

12. The polypropylene resin article of claim 11, which is prepared by injection-molding the polypropylene resin composition.

13. The polypropylene resin article of claim 11 or 12, which has an Izod impact strength of 50 kgf·cm/cm or more when measured at 23°C and an Izod impact strength of 50 kgf·cm/cm or more when measured at 0°C in accordance with ASTM D256.

14. The polypropylene resin article of any one of claims 11 to 13, which is an automobile interior or exterior part, a toy for children, or a food storage container.

## Patentansprüche

1. Polypropylenharzzusammensetzung, die, basierend auf dem Gesamtgewicht von Komponenten (A) und (B), (A) 85 bis 97 % Gewichtsanteil eines Propylen-Ethylen-Blockcopolymers, das durch die Polymerisation eines Propylenhomopolymers als Matrix mit einem Propylen-Ethylen-Kautschuk-Copolymer in Stufen in Reaktoren erhalten wird; und (B) 3 bis 15 % Gewichtsanteil eines Polyethylens umfasst, wobei, wenn das Propylen-Ethylen-Blockcopolymer (A) mit einem Xylol-Lösungsmittel bei Raumtemperatur gemäß ASTM D5492 extrahiert wird, der Gehalt des Propylen-Ethylen-Kautschuk-Copolymers gemessen als Menge eines Lösungsmittelextraktes (oder xylollöslichen Stoffes) 25 bis 40 % Gewichtsanteil beträgt, der Gehalt an Ethylen im xylollöslichen Stoff gemessen durch FT-IR gemäß ASTM D3900 35 bis 45 % Gewichtsanteil beträgt, der Gehalt an Ethylen im Propylen-Ethylen-Blockcopolymer (A) gemessen durch FT-IR gemäß ASTM D3900 9 bis 20 % Gewichtsanteil beträgt, und das Verhältnis (MFR_{T}/MFRₘ) des Schmelzindex (MFR_{T}) der Polypropylenharzzusammensetzung zum Schmelzindex (MFR_{M}) der Propylenhomopolymermatrix des Propylen-Ethylen-Blockcopolymers (A) 0,3 oder weniger erfüllt, wenn bei 230 °C unter einer Last von 2,16 kg gemessen.

2. Polypropylenharzzusammensetzung nach Anspruch 1, wobei das Propylen-Ethylen-Blockcopolymer (A) einen Schmelzindex von 30 bis 50 g/10 Minuten aufweist, wenn gemessen bei 230 °C unter einer Last von 2,16 kg gemäß ASTM D1238.

3. Polypropylenharzzusammensetzung nach Anspruch 1 oder 2, wobei das Polyethylen (B) ein Polyethylen niedriger Dichte (LDPE), ein lineares Polyethylen niedriger Dichte (LLDPE) oder ein Polyethylen hoher Dichte (HDPE) umfasst.

4. Polypropylenharzzusammensetzung nach Anspruch 3, wobei das Polyethylen (B) ein Polyethylen hoher Dichte umfasst.

5. Polypropylenharzzusammensetzung nach einem der Ansprüche 1 bis 4, die ferner mindestens ein Additiv umfasst, ausgewählt aus der Gruppe bestehend aus einem Antioxidans, einem Neutralisator, einem Gleitmittel, einem Antiblockiermittel, einem Verstärkungsmittel, einem Füller, einem Witterungsstabilisator, einem Antistatikmittel, einem Schmiermittel, einem Nukleierungsmittel, einem Flammschutzmittel, einem Pigment und einem Farbstoff.

6. Polypropylenharzzusammensetzung nach Anspruch 5, wobei das Antioxidans mindestens eines ausgewählt aus der Gruppe bestehend aus Pentaerythrittetrakis(3-(3,5-di-t-butyl-4-hydroxyphenyl)propionat), 1,3,5-Trimethyl-2,4,6-tris(3,5-di-t-butyl-4-hydroxybenzyl)benzol und Tris(2,4-di-t-butylphenyl)phosphit in einer Menge von 0,05 bis 0,3 Gewichtsteilen bezogen auf 100 Gewichtsteile von Komponenten (A) und (B) umfasst.

7. Polypropylenharzzusammensetzung nach Anspruch 5, wobei der Neutralisator mindestens einen ausgewählt aus der Gruppe bestehend aus Hydrotalcit und Calciumstearat in einer Menge von 0,05 bis 0,3 Gewichtsteilen bezogen auf 100 Gewichtsteile von Komponenten (A) und (B) umfasst.

8. Polypropylenharzzusammensetzung nach einem der Ansprüche 1 bis 7, die einen Schmelzindex von 30 bis 50 g/10 Minuten aufweist, wenn bei 230 °C unter einer Last von 2,16 kg gemäß ASTM D1238 gemessen.

9. Polypropylenharzzusammensetzung nach einem der Ansprüche 1 bis 8, wobei die Polypropylenharzzusammensetzung, wenn sie durch Differentialscanningkalorimetrie analysiert wird, eine Temperatur des ersten Peaks im Bereich von 125 bis 130 °C aufweist, die während der zweiten Temperaturerhöhung auftritt.

10. Polypropylenharzzusammensetzung nach einem der Ansprüche 1 bis 9, die 400 ppm oder weniger einer Menge an insgesamt ausgetragenen flüchtigen organischen Verbindungen aufweist.

11. Polypropylenharzartikel, geformt aus der Polypropylenharzzusammensetzung entsprechend einem der Ansprüche 1 bis 10.

12. Polypropylenharzartikel nach Anspruch 11, der durch Spritzgießen der Polypropylenharzzusammensetzung hergestellt ist.

13. Polypropylenharzartikel nach Anspruch 11 oder 12, der eine Izod-Schlagfestigkeit von 50 kgf-cm/cm oder mehr, wenn gemessen bei 23 °C, und eine Izod-Schlagfestigkeit von 50 kgf-cm/cm oder mehr, wenn gemessen bei 0 °C gemäß ASTM D256, aufweist.

14. Polypropylenharzartikel nach einem der Ansprüche 11 bis 13, der ein Automobilinnen- oder -außenteil, ein Spielzeug für Kinder oder ein Lebensmittelaufbewahrungsbehälter ist.

## Revendications

1. Composition de résine de polypropylène, qui comprend, sur la base du poids total de composants (A) et (B), (A) 85 à 97 % en poids d'un copolymère à blocs de propylène-éthylène obtenu par la polymérisation d'un homopolymère de propylène en tant que matrice avec un copolymère de caoutchouc de propylène-éthylène par étapes dans des réacteurs ; et (B) 3 à 15 % en poids d'un polyéthylène, dans laquelle, lorsque le copolymère à blocs de propylène-éthylène (A) est extrait avec un solvant de xylène à température ambiante selon la norme ASTM D5492, la teneur du copolymère de caoutchouc de propylène-éthylène mesurée en tant que quantité d'un extrait au solvant (ou soluble dans le xylène) est de 25 à 40 % en poids, la teneur en éthylène dans la fraction soluble dans le xylène lorsqu'elle est mesurée par FT-IR selon la norme ASTM D3900 est de 35 à 45 % en poids, la teneur en éthylène dans le copolymère à blocs de propylène-éthylène (A) lorsqu'elle est mesurée par FT-IR selon la norme ASTM D3900 est de 9 à 20 % en poids, et le rapport (MFR_{T}/MFR_{M}) de l'indice de fusion (MFR_{T}) de la composition de résine de polypropylène à l'indice de fusion (MFR_{M}) de la matrice d'homopolymère de propylène du copolymère à blocs de propylène-éthylène (A) est inférieur ou égal à 0,3 lorsqu'il est mesuré à 230 °C sous une charge de 2,16 kg.

2. Composition de résine de polypropylène de la revendication 1, dans laquelle le copolymère à blocs de propylène-éthylène (A) présente un indice de fusion de 30 à 50 g/10 minutes lorsqu'il est mesuré à 230 °C sous une charge de 2,16 kg selon la norme ASTM D1238.

3. Composition de résine de polypropylène de l'une des revendications 1 ou 2, dans laquelle le polyéthylène (B) comprend un polyéthylène basse densité (LDPE), un polyéthylène linéaire basse densité (LLDPE) ou un polyéthylène haute densité (HDPE).

4. Composition de résine de polypropylène de la revendication 3, dans laquelle le polyéthylène (B) comprend un polyéthylène haute densité.

5. Composition de résine de polypropylène de l'une quelconque des revendications 1 à 4, qui comprend en outre au moins un additif choisi dans le groupe constitué par un antioxydant, un neutralisant, un agent de glissement, un agent antiblocage, un agent de renforcement, une charge, un stabilisateur contre le vieillissement climatique, un agent antistatique, un lubrifiant, un agent de nucléation, un retardateur de flamme, un pigment et un colorant.

6. Composition de résine de polypropylène de la revendication 5, dans laquelle l'antioxydant comprend au moins l'un choisi dans le groupe constitué par le tétrakis(3-(3,5-di-t-butyl-4-hydroxyphényl)propionate) de pentaérythritol, le 1,3,5-triméthyl-2,4,6-tris(3,5-di-t-butyl-4-hydroxybenzyl)benzène et la tris(2,4-di-t-butylphényl)phosphite en une quantité de 0,05 à 0,3 partie en poids par rapport à 100 parties en poids de composants (A) et (B).

7. Composition de résine de polypropylène de la revendication 5, dans laquelle le neutralisant comprend au moins l'un choisi dans le groupe constitué par l'hydrotalcite et le stéarate de calcium en une quantité de 0,05 à 0,3 partie en poids par rapport à 100 parties en poids de composants (A) et (B).

8. Composition de résine de polypropylène de l'une quelconque des revendications 1 à 7, qui présente un indice de fusion de 30 à 50 g/10 minutes lorsqu'il est mesuré à 230 °C sous une charge de 2,16 kg selon la norme ASTM D1238.

9. Composition de résine de polypropylène de l'une quelconque des revendications 1 à 8, dans laquelle lorsque la composition de résine de polypropylène est analysée par analyse calorimétrique différentielle, elle présente une température du premier pic comprise dans la plage de 125 à 130 °C qui apparaît pendant la seconde élévation de température.

10. Composition de résine de polypropylène de l'une quelconque des revendications 1 à 9, qui contient 400 ppm ou moins d'une quantité de composés organiques volatils totaux déchargés.

11. Article en résine de polypropylène moulé à partir de la composition de résine de polypropylène de l'une quelconque des revendications 1 à 10.

12. Article en résine de polypropylène de la revendication 11, qui est préparé par moulage par injection de la composition de résine de polypropylène.

13. Article en résine de polypropylène de l'une des revendications 11 ou 12, qui présente une résistance aux chocs Izod de 50 kgf·cm/cm ou plus lorsqu'elle est mesurée à 23 °C et une résistance aux chocs Izod de 50 kgf·cm/cm ou plus lorsqu'elle est mesurée à 0 °C selon la norme ASTM D256.

14. Article en résine de polypropylène de l'une quelconque des revendications 11 à 13, qui est une pièce intérieure ou extérieure d'automobile, un jouet pour enfants ou un récipient de stockage de nourriture.
